# EUROPEAN PATENT APPLICATION

(11) **EP 2 559 464 A1**
(43) Date of publication of application: **20.02.2013**
(21) Application number: 10849734.8
(22) Date of filing: 26.10.2010
(51) Int. Cl.: A63F 13/04

(54) **GUN-SHAPED GAME CONTROLLER**

(30) Priority: 14.04.2010 CN 201010151979
(71) Applicant: Sunup Mecha-Electronic Equipment Co., Ltd, Shenzhen, Guangdong 518000 (CN)
(72) Inventor: WANG, Yi Zhong, Guangdong 518000 (CN)
(74) Representative: Chaillot, Geneviève
(86) International application number: PCT/CN2010/078106
(87) International publication number: WO 2011/127725

(57) **Abstract**

A gun-shaped game controller mainly consists of a gun shell (1), an aligning key (2), customizing function keys (3), a two-axis gyroscope chip (4), a two-axis geomagnetic chip (5), a three-axis gravity acceleration chip (6), a body capacity type touching chip (7), a battery box (8), a trigger (9), a direction key (10), a cancel key (11), an infrared sensor (12), an angle adjusting knob (13) and a main control circuit board (14). The aligning key (2), the customizing function keys (3), the battery box (8), the trigger (9), the direction key (10), the cancel key (11) and the angle adjusting knob (13) are arranged on the gun shell (1). The two-axis gyroscope chip (4), the two-axis geomagnetic chip (5), the three-axis gravity acceleration chip (6), the body capacity type touching chip (7), the infrared sensor (12) and the main control circuit board (14) are arranged in the gun shell (1). The two-axis gyroscope chip (4), the two-axis geomagnetic chip (5) and the three-axis gravity acceleration chip (6) realize three-dimensional spatial location through a mathematical model algorithm in space geometry.

## Description

### Technical Field

The present invention relates to a magneton induction gun used for computer games.

### Background Art

At present, there are extremely few peripherals designed for computer shooting games. Computer shooting games are still played with keyboards and mice. This is mainly because none of the major manufacturers are able to provide a positioning recognition sensor to achieve precise positioning of air action. Different companies use different air positioning methods. Light guns and air mice are used to control a computer cursor through their spatial movements and they have certain applicability. A light gun is used together with an infrared emission source in front of a computer screen; signals relating to movement of the gun within a certain area are sent to the computer. However, there are some disadvantages as described below: 1. The installation of the infrared source is difficult; if the infrared source is installed at an unsuitable angle, infrared signals could not be sent and so the gun cannot be operated at a flexible manner; 2. A CD-ROM drive and significant computer resource are needed to install the driver program; 3. It does not support playing games on a large projection screen.

Air mouse operated under the gyroscope principle can achieve very precise air movement positioning, yet during air movement, there are no supporting points for hands. Therefore, it is difficult to point accurately on icons which require double-click. More particularly, in the WINDOWS operating system and LINUX system, there are many icons which require double-click for activation. After the user moves the cursor onto the icon and click once, the cursor, which is originally positioned on the icon, is moved by the hand's force during the first click so that the cursor is moved away from the icon during the second click. This leads to malfunctioning because the user always clicks improperly.

### Disclosure of the Invention

In view of the aforesaid disadvantages now present in the prior art, the present invention provides a magneton induction gun used for computer games which is simple in structure, convenient and easy to use, and precise and reliable to operate.

To attain this, the present invention is as follows:

The present invention generally comprises a gun shell, a calibration key, self-defined function keys, a two-axis gyroscope chip, a two-axis geomagnetic chip, a three-axis gravity acceleration chip, a human body capacitive touch chip, a battery compartment, a trigger, an arrow key, a cancel key, an infrared sensor, an angle adjustment knob and a main control circuit board, wherein the calibration key, the self-defined function keys, the battery compartment, the trigger, the arrow keys, the cancel key and the angle adjustment knob are disposed on the gun shell; the two-axis gyroscope chip, the two-axis geomagnetic chip, the three-axis gravity acceleration chip, the human body capacitive touch chip, the infrared sensor and the main control circuit board are disposed inside the gun shell, with each of the said components connected to the main control circuit board via electric circuits. In particular, the gun shall has a handle disposed with a mouse right-click button; the trigger serves as a mouse left-click button; the cancel key serves as a keyboard ESC key. The two-axis gyroscope chip, the two-axis geomagnetic chip and the three-axis gravity acceleration chips achieve 3D spatial positioning of three-dimensional space of a "virtual potentiometer" via spatial geometrical mathematical modeling algorithm. The three-axis gravity acceleration chip achieves motion-sensing function and thereby enhances the sense of reality of the game. With the help of the human body capacitive touch chip and the infrared sensor, it is able to achieve functions which can only be achieved through the use of keys on keyboards in alternative games. The infrared sensor and the human body capacitive touch chip enhance the playability of the game. The main control circuit board is provided with a main control processor chip which detects voltage change of an input pin of the infrared sensor to determine whether the user's hand has performed corresponding functional operation to meet predetermined objectives during game play.

When using the gun, the muzzle of the present invention is initially pointed to the display screen. Calibration is then performed with the calibration key. At this moment, the main control processor chip can calculate a reference direction from the angle between the magneton induction gun and the Earth's Magnetic North using the two-axis geomagnetic chip. The reference direction is defined as the zero point of the virtual Y-axis of the display screen. At the same time, the main control processor chip collects Y-axis data of the acceleration sensor to calculate the elevation angle of the magneton induction gun as the zero point of the virtual X-axis of the display screen. Then the user can use the angle adjustment knob to adjust the virtual X-axis and the virtual Y-axis of the display screen corresponding to the angle between the magneton induction gun muzzle movement and the zero point. The user can adjust the virtually adjustable range of movement by the angle adjustment knob. When the gun muzzle points to the direction of the display screen, the magneton induction gun can only move within the coordinates of the X-axis and Y-axis of the virtually adjustable range of movement. If the computer cursor is close to moving toward a deviated direction, the user would be informed that the magneton induction gun muzzle has deviated from the screen and needs to move back. The magneton induction gun calculates the size of the virtually adjustable range of movement and the direction of the magneton induction gun muzzle and restricts the range of movement of the magneton induction gun. The movement data of the X-axis and Y-axis within the range of movement comes from the highly precise X-Z-axis gyroscope. The X-axis data collected from the X-Z-axis gyroscope is used to calculate the movement along the direction of the virtual X-axis of the display screen. The Z-axis data is used to calculate the movement along the direction of the virtual Y-axis of the display screen. The X-Z-axis gyroscope can identify the direction of movement of the gun and the values of movement can be obtained by means of the mathematical calculation of the movement of the computer cursor by the main control processing chip of the magneton induction gun, thereby achieving virtual potentiometer positioning.

The three-axis gravity acceleration chip can sense corresponding data via any one-axis, two-axis or three-axis movement speed. When the main control processor chip identifies a match between the data output from the three-axis gravity acceleration chip and the data of a predetermined action, it will issue a command indicating that the user has performed an action corresponding to the predetermined action in the game. This completes the process of the movement sensing function of the three-axis gravity acceleration chip.

When a human hand is placed inside a sensing area of the electrode board of a human body capacitive touch chip, a distributed capacitance is formed between the hand and the electrode board. This capacitance value is calculated by the human body capacitive touch chip. When someone touches the sensing area, the distributed capacitance value of the sensing area increases and the human body capacitive touch chip outputs high voltage signal to the main control processor chip of the magneton induction gun which will then signal to indicate that the user is performing a touch action.

If no one touches the sensing area of the electrode board of the human body capacitive touch chip, the human body capacitive touch chip will output low voltage signal. At this moment, the main control processor chip of the magneton induction gun can simply issue no touch signal.

The present invention has the following advantages:
1. In terms of ergonomics, the present invention is left-right symmetrically disposed with buttons with size suitable for human hands, thus suitable for both left-handed and right-handed people.
2. The present invention is provided with multiple sensors, which makes the operation faster, more convenient and flexible.
3. The present invention achieves precise and flexible 3D spatial positioning of a "virtual potentiometer" via spatial geometrical mathematical modeling algorithm.
4. The present invention operates with conventional 1.5V AA battery and is therefore convenient to use.
5. The present invention operates with wireless 2.4G free ISM band. Since the shooting distance is less than 10M, it is safe and reliable.

### Brief Description of Drawings

The present invention will further be illustrated together with the accompanying drawings, yet the present invention should not be limited thereby.
Figure 1 shows a schematic view of the structure of the present invention.
Figure 2 shows a schematic view of the positioning principle of the virtual potentiometer of the present invention.

In the drawings: 1 refers to gun shell; 2 refers to calibration key; 3 refers to self-defined function keys; 4 refers to two-axis gyroscope chip; 5 refers to two-axis geomagnetic chip; 6 refers to three-axis gravity acceleration chip; 7 refers to human body capacitive touch chip; 8 refers to battery compartment; 9 refers to trigger; 10 refers to arrow key; 11 refers to cancel key; 12 refers to infrared sensor; 13 refers to angle adjustment knob; 14 refers to main control circuit board; 15 refers to mouse right-click button; 16 refers to main control processor chip; 17 refers to display screen; 18 refers to virtual Y-axis; 19 refers to virtual X-axis; 20 refers to virtually adjustable range of movement.

### Best Mode for Carrying out the Invention

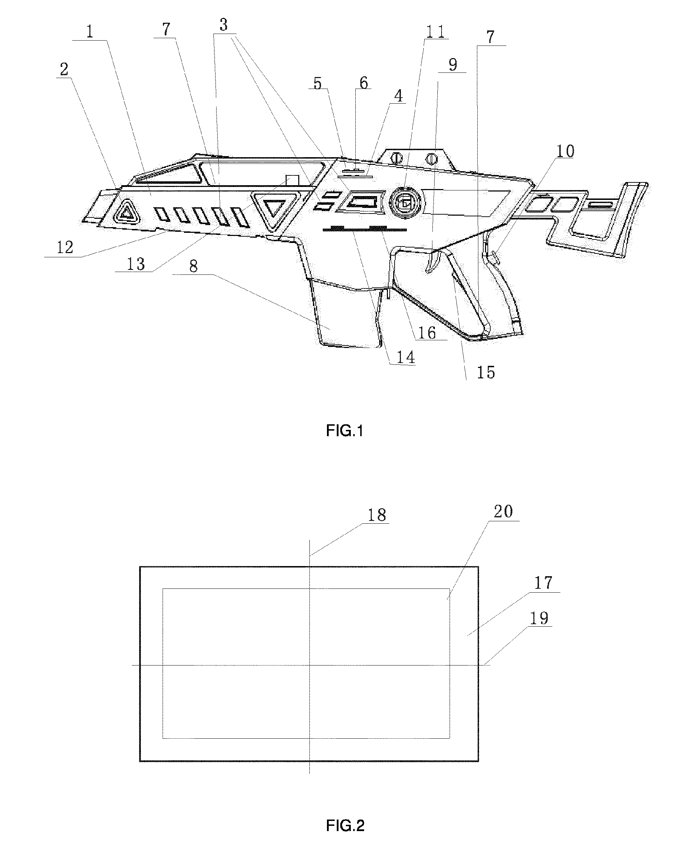

As illustrated in Figure 1, the present invention generally comprises a gun shell (1), a calibration key (2), self-defined function keys (3), a two-axis gyroscope chip (4), a two-axis geomagnetic chip (5), a three-axis gravity acceleration chip (6), a human body capacitive touch chip (7), a battery compartment (8), a trigger (9), an arrow key (10), a cancel key (11), an infrared sensor (12), an angle adjustment knob (13) and a main control circuit board (14). The calibration key (2), the self-defined function keys (3), the battery compartment (8), the trigger (9), the arrow key (10), the cancel key (11) and the angle adjustment knob (13) are disposed on the gun shell (1). The two-axis gyroscope chip (4), the two-axis geomagnetic chip (5), the three-axis gravity acceleration chip (6), the human body capacitive touch chip (7), the infrared sensor (12) and the main control circuit board (14) are disposed inside the gun shell, with each of the said components connected to the main control circuit board (14) via electric circuits. In particular, the gun shell (1) has a handle disposed with a mouse right-click button (15); the trigger (9) serves as a mouse left-click button; the cancel key (11) serves as a keyboard ESC key. The two-axis gyroscope chip (4), the two-axis geomagnetic chip (5) and the three-axis gravity acceleration chip (6) achieve 3D spatial positioning of a "virtual potentiometer" via spatial geometrical mathematical modeling algorithm. The three-axis gravity acceleration chip (6) achieves motion-sensing function and thereby enhances the sense of reality of the game. With the help of the human body capacitive touch chip (7) and the infrared sensor (12), it is able to achieve functions which can only be achieved through the use of keys on keyboards in alternative games. The infrared sensor (7) and the human body capacitive touch chip (11) enhance the playability of the game. The main control circuit board (14) is provided with a main control processor chip (16) which detects voltage change of an input pin of the infrared sensor to determine whether user's hand has performed corresponding functional operation to meet predetermined objectives during game play.

As illustrated in Figure 2, the muzzle of the present invention is initially pointed to the display screen (17). Calibration is then performed with the calibration key (2). At this moment, the main control processor chip (16) can calculate a reference direction from the angle between the magneton induction gun and the Earth's Magnetic North using the two-axis geomagnetic chip (5). The reference direction is defined as the zero point of the virtual Y-axis (18) of the display screen (17). At the same time, the main control processor chip (16) collects Y-axis data of the acceleration sensor to calculate the elevated angle of the magneton induction gun as the zero point of the virtual X-axis (19) of the display screen (17). Then the user can use the angle adjustment knob (13) to adjust the virtual X-axis (19) and the virtual Y-axis (18) of the display screen corresponding to the angle between the magneton induction gun muzzle movement and the zero point. The user can adjust the virtually adjustable range of movement (20) by the angle adjustment knob (13). When the gun muzzle points to the direction of the display screen, the magneton induction gun can only move within the coordinates of the X-axis and Y-axis of the virtually adjustable range of movement (20). If the computer cursor is close to moving toward a deviated direction, the user would be informed that the magneton induction gun muzzle has deviated from the screen and needs to move back. The magneton induction gun calculates the size of the virtually adjustable range of movement (20) and the direction of the magneton induction gun muzzle and restricts the range of movement of the magneton induction gun. The movement data of the X-axis and Y-axis within the range of movement comes from the highly precise X-Z-axis gyroscope. The X-axis data collected from the X-Z-axis gyroscope is used to calculate the movement along the direction of the virtual X-axis (19) of the display screen; the Z-axis data is used to calculate the movement along the direction of the virtual Y-axis (18) of the display screen. The X-Z-axis gyroscope can identify the direction of movement of the gun, and the values of movement can be obtained by means of the mathematical calculation of the movement of the computer cursor by the main control processing chip of the magneton induction gun, thereby achieving virtual potentiometer positioning.

The present invention is safe, reliable, convenient to use, precise in positioning, and widely applicable in the industry of magneton induction gun for computer games.

## Claims

1. A magneton induction gun used for computer games which comprises a gun shell (1), a calibration key (2), self-defined function keys (3), a two-axis gyroscope chip (4), a two-axis geomagnetic chip (5), a three-axis gravity acceleration chip (6), a human body capacitive touch chip (7), a battery compartment (8), a trigger (9), an arrow key (10), a cancel key (11), an infrared sensor (12), an angle adjustment knob (13) and a main control circuit board (14), wherein the calibration key (2), the self-defined function keys (3), the battery compartment (8), the trigger (9), the arrow key (10), the cancel key (11) and the angle adjustment knob (13) are disposed on the gun shell (1), whereas the two-axis gyroscope chip (4), the two-axis geomagnetic chip (5), the three-axis gravity acceleration chip (6), the human body capacitive touch chip (7), the infrared sensor (12) and the main control circuit board (14) are disposed inside the gun shell, with each of the said components connected to the main control circuit board(14) via electrical circuits.

2. The magneton induction gun used for computer games as in Claim 1, wherein the gun shell (1) has a handle disposed with a mouse right-click button; the trigger(9) serves as a mouse left-click button; the cancel key (11) serves as a keyboard ESC key.

3. The magneton induction gun used for computer games as in Claim 1, wherein the two-axis gyroscope chip (4), the two-axis geomagnetic chip (5) and the three-axis gravity acceleration chip (6) achieve 3D spatial positioning of a "virtual potentiometer" via spatial geometrical mathematical modeling algorithm.
